# EUROPEAN PATENT SPECIFICATION

(11) **EP 1 451 978 B1**
(45) Date of publication and mention of the grant of the patent: **10.10.2007**
(21) Application number: 01274790.3
(22) Date of filing: 22.11.2001
(51) Int. Cl.: H04L 12/56, H04L 12/64

(54) **A SCALABLE ROUTER-BASED NETWORK NODE**
NETZWERKKNOTEN AUF DER BASIS EINES SKALIERBAREN ROUTERS
NOEUD DE RESEAU EXTENSIBLE A ROUTEURS

(43) Date of publication of application: 01.09.2004
(73) Proprietor: TELEFONAKTIEBOLAGET LM ERICSSON (publ), 164 83 Stockholm (SE)
(72) Inventor: LINDHOLM, Lars, Ake, Anders, S-146 37 Tullinge (SE); PETERSEN, Lars-Göran, S-147 42 Tumba (SE)
(74) Representative: Hedman, Anders
(86) International application number: PCT/SE2001/002585
(87) International publication number: WO 2003/045019

(56) References cited:
- EP-A- 0 926 859
- EP-A2- 1 081 899
- EP-A2- 1 107 507
- WO-A2-01/30035
- WO-A2-01/37482
- EKEROTH L. ET AL.: 'GPRS support nodes' ERICSSON REVIEW vol. 3, 2000, pages 163 - 165, XP000966161
- CHOUDHURY G.L. ET AL.: 'Faster link-state IGP convergence and improved network scalability and stability' IETF 2001, XP010584026

## Description

### TECHNICAL FIELD OF THE INVENTION

The present invention generally relates to routing in communication networks, and more specifically to the architecture and configuration of a router-based network node.

### BACKGROUND OF THE INVENTION

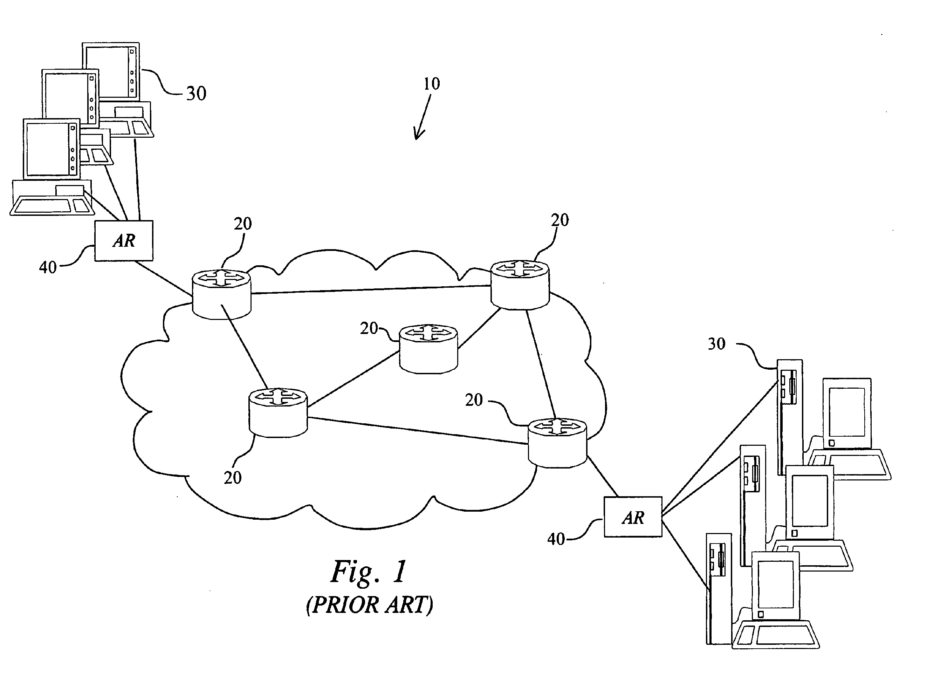

Many modem communication networks such as Internet Protocol (IP) based networks are connectionless. In a connectionless or packet-oriented network, information is transferred in the form of packets that are guided over the network by means of interconnected routers or special switches. Fig. 1 is a schematic diagram of an exemplary packet-oriented network. The overall network 10 is based on a number of interconnected routers 20. The network is accessed by different users 30 (computers, servers, etc.) through access points. A plurality of users are typically connected to some form of aggregation point, such as an access router 40, which acts an intermediate between the end-users and the core network. Each packet generally contains a full destination address, and the routers 20, 40 maintain routing tables by means of which the packet is routed through the network 10 between source and destination nodes. Each routing table is normally configured in such a way that the destination address in an incoming packet serves as input to routing table for determining a so-called next hop link on the path to the final destination.

In small and slowly changing network environments such as small corporate internetworks, the network administrator can establish and reconfigure the routing tables by hand. However, as the network environment grows and/or changes rapidly, the manual configuration of the routing tables becomes a costly and tedious work. In large and rapidly changing environments such as the global Internet, manual reconfiguration is simply not an option. Therefore, protocols that allow automatic and dynamic configuration of routing tables, covering whole networks or parts thereof, have emerged.

In order to automate the task of configuring the routing tables, the routers are designed to recurrently exchange routing information and/or other network reachability information and dynamically update the routing tables accordingly. However, as the network grows and the number of interrelated routers increases, the mutual exchange of information and the subsequent work of properly updating the routing tables puts a lot of pressure on the processing capacity in the routers. This problem is particularly pronounced in modem routers using link-state routing protocols such as the popular Open Shortest Path First (OSPF) protocol.

In a link-state routing protocol, such as OSPF, each router maintains a link-state database describing the topology of the routing domain (also referred to as the autonomous system). Each participating router keeps track of the status of each of its own links, and periodically broadcasts this link status information in so-called link state advertisements (LSA) throughout the autonomous system in order to keep the link-state databases of the routers consistent and synchronized. From the link-state database, each router calculates a routing table, for example by applying the well-known Dijkstra shorterst path algorithm and constructing a tree of shortest paths with the router itself as the root. This shortest-path tree provides the shortest path from the root to each destination in the autonomous system. The shortest-path tree and the corresponding routing table are dynamically updated in response to changes in the link-state databases.

The amount of LSA update traffic may be quite significant, especially in the case of a major network change such as a link or node failure, or in connection with software/hardware upgrades in the nodes. The simultaneous or near-simultaneous broadcasting of a large number of LSA messages is commonly referred to as an LSA storm, which in severe cases tends to drive the processor (CPU) utilization to 100% for a longer time period than what is generally accepted. During this period, other important processes within the node may be stalled and even timed-out. For example, so-called hello packets received at the node would experience a delay, and if this delay exceeds a predetermined threshold the associated link will be declared as down. There may also be other effects of long CPU-busy periods. In a node architecture with an active processor and a standby processor, a switch between the processors may be triggered during an extended CPU-busy period, which may result in that all the adjacencies, i.e. associations to other adjacent routers, are lost and therefore have to be re-established. Both of these events will lead to more database synchronization and LSA flooding, which in turn may cause extended CPU-busy periods in other routers. This may render the entire network unstable for an extended period of time, or potentially lead to a system meltdown in extreme cases.

As noted in the Internet Draft *Explicit Marking and Prioritized Treatment of Specific IGP Packets for Faster IGP Convergence and Improved Network Scalability and Stability* by the Internet Engineering Task Force (IETF), March 2001, the CPU-busy period increases with the size of the initial LSA storm, but is also affected by the number of adjacent routers (commonly referred to as the node adjacency). For each LSA update generated elsewhere, the node will receive one new LSA packet over each interface, send an acknowledgement packet over that interface and send copies of the LSA packet over the remaining interfaces. Also, assuming that the implicit acknowledgement mechanism is in use, the node will subsequently receive either an acknowledgement or a duplicate LSA over the remaining interfaces. So over each interface one packet is sent and one is received. The total work per LSA update is thus linearly dependent on the node adjacency, i.e. the number of link interfaces to adjacent routers.

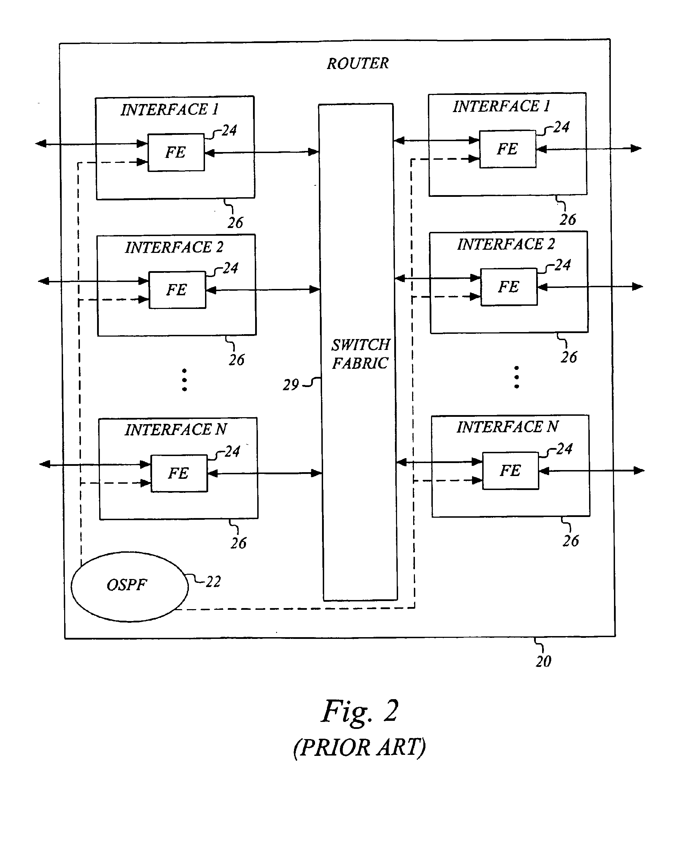

In state-of-the-art routers with distributed forwarding, the number of link interfaces to adjacent routers is allowed to grow significantly. Fig. 2 is a schematic block diagram of a conventional OSPF router with distributed forwarding. The router 20 operates with a single OSPF process 22, and basically includes a set of co-operating forwarding engines (FE) 24, each of which is associated with a dedicated link interface 26. The OSPF routing table is distributed to each one of the forwarding engines 24 from the central OSPF process 22. Each forwarding engine 24 comprises logic for making a look-up in the distributed routing table based on the destination address of an incoming packet and for re-routing the packet to another link interface 26 through the switch fabric 29. The scalability offered by this type of distributed router 20 is a great advantage in that the router becomes powerful in terms of link interfaces 26 and the number of maintained routes. However, the problem of CPU-busy periods caused by a large number of link interfaces to adjacent routers will generally be even more pronounced in routers with distributed forwarding. Since it is very difficult to distribute an OSPF process without a large overhead, the OSPF process becomes the bottleneck with CPU-busy periods as a natural consequence.

As communication networks grow larger, bigger LSA storms as well as a higher node adjacency at certain nodes can be expected. As should be understood from the above, this will typically degrade the stability, reliability and effectiveness of the networks. Accordingly, there is a general demand for an efficient strategy to deal with the scalability issues encountered in router-based communication networks.

One prior art way of addressing the scalability issue is to partition the autonomous system into smaller areas and confine the LSA update traffic within localized areas. The topology of a given area is hidden from the rest of the autonomous system, and routers within the area do not know the detailed topology outside of the area (only summary LSA messages are exchanged between areas). This isolation of information gives a significant reduction in LSA update traffic as compared to treating the entire autonomous system as a single link-state domain. Although this approach has been used in the prior art with some success, it increases network management and design complexity and generally leads to non-optimal routing. EP 0 926 859 relates to a multiple virtual router defining a subsystem that allows multiple network layer protocols (i.e. IP, IPX and Bridging protocols) to co-exist on the same physical port.

### SUMMARY OF THE INVENTION

The present invention overcomes these and other drawbacks of the prior art arrangements.

It is a general object of the present invention to provide a stable and reliable packet-oriented network, even when the size of the network and the number of interrelated network nodes increases significantly.

It is also an object of the invention to improve the ability of the participating router-based network nodes to handle increases in the mutual exchange of routing information. In this respect, it is desirable to prevent that the routing protocol process overloads the network node processor due to heavy update traffic.

It is another object of the invention to provide a scalable network node implementation, as well as a method of configuring such a network node.

Yet another object of the invention is to provide an improved OSPF node as well as an improved OSPF network.

These and other objects are met by the invention as defined by the accompanying patent claims.

The general idea according to the invention is to distribute the adjacent-router link interfaces of a network node among several logical routers and provide a node-internal interface between at least two of the logical routers. Each logical router is generally assigned a dedicated subset of the adjacent-router link interfaces of the network node and executes a respective routing process relating to the corresponding subset of the external interfaces and the node-internal interface. In this way, the number of adjacencies related to each logical router will be reduced compared to the overall node adjacency, leading to a reduction in the load on the corresponding routing protocol process.

By dividing the network node into two or more logical routers interconnected by a node-internal interface, it is possible to run the corresponding routing protocol processes on separate processors, one for each logical router. This network node implementation is directly scalable by selecting the number of logical routers and properly dividing the adjacencies of the network node among the logical routers.

It is thus apparent that scalability in a connectionless network can be substantially improved without attempting to distribute a *single* OSPF or other dynamic routing protocol process onto several processors, which is an extremely difficult task, and without having to divide the autonomous system into areas.

Advantageously, the node-internal interface is implemented as a highly efficient logical interface by simply switching between the routing tables of the involved logical routers. This gives the node-internal interface an unlimited bandwidth.

Although the invention is particularly applicable to link-state routing protocols, it can also be used with other dynamic routing protocols that are based on a mutual exchange of routing information between routers.

The invention offers the following advantages:
- Improved network stability and reliability;
- Reduced load on the routing protocol process;
- Improved scalability; and
- Highly efficient implementation of the node-internal interface.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a schematic diagram of an exemplary conventional packet-oriented network;
Fig. 2 is a schematic block diagram of a conventional OSPF router with distributed forwarding;
Fig. 3 is a schematic block diagram of an exemplary conventional OSPF network illustrated as a central network node connected to a plurality of adjacent nodes;
Fig. 4 is a schematic block diagram of an exemplary OSPF network with a central network node in accordance with the general principle of the invention;
Fig. 5 is a schematic block diagram of an OSPF network node in accordance with a first embodiment of the invention;
Fig. 6 is a schematic block diagram of an OSPF network node in accordance with a preferred embodiment the invention;
Fig. 7 is a schematic block diagram illustrating a practical implementation of an OSPF network node with a node-internal logical interface in accordance with the invention;
Fig. 8 illustrates a preferred implementation of a node-internal logical interface in accordance with the invention; and
Fig. 9 is a flow diagram of a routing method in accordance with the invention.

### DETAILED DESCRIPTION OF EMBODIMENTS OF THE INVENTION

Throughout the drawings, the same reference characters will be used for corresponding or similar elements.

In the following, the invention will mainly be described with reference to networks based on the OSPF protocol. Although the invention is particularly useful in such networks or networks based on similar link-state routing protocols, it is also applicable to other dynamic routing protocols such as the Routing Information Protocol (RIP), the Border Gateway Protocol (BGP), the Enhanced Interior Gateway Routing Protocol (EIGRP) and the Intermediate-System-to-Intermediate-System (IS-IS) Protocol. Statements referring to OSPF-processes are thus generally valid for other routing protocol processes as well.

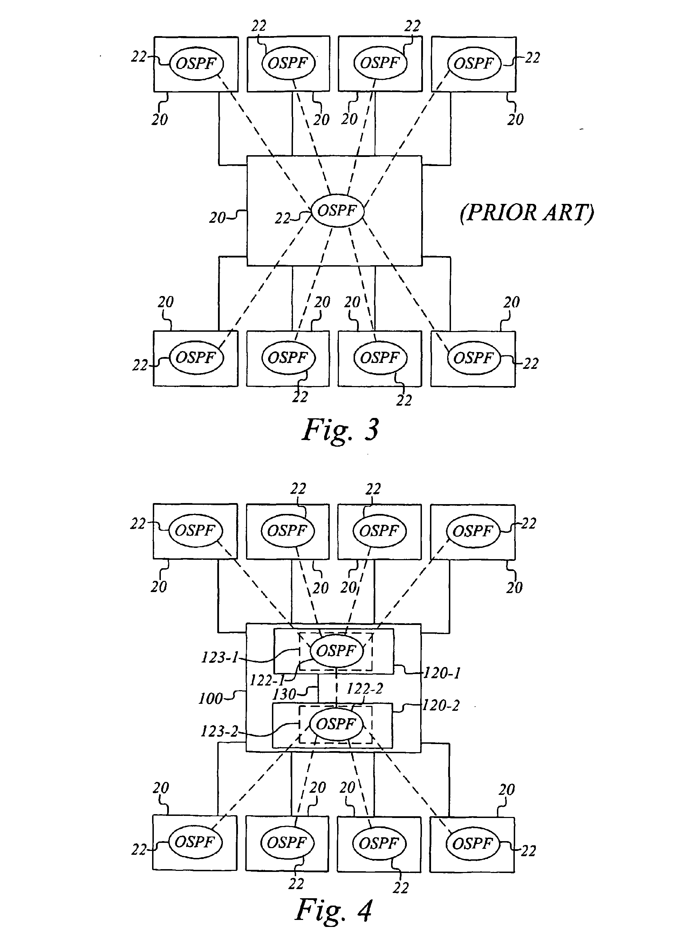

For a better understanding of the invention, we will begin by examining the concept of node adjacency with respect to a conventional OSPF network. Fig. 3 is a schematic diagram of an exemplary OSPF network illustrated as a central network node connected to a plurality of adjacent nodes. In the example of Fig. 3, the central node is a router 20 operating with a single OSPF process 22. This central router 20 is connected to eight other routers, also designated by reference numeral 20, each maintaining a routing table and executing a respective OSPF-process 22. The central router is thus connected to eight adjacent routers, assuming that the routers exchange routing information to keep the link state databases synchronized. The node adjacency, i.e. the total number of adjacencies (illustrated by dashed lines), of the central network node of Fig. 3 is thus equal to 8.

Although Fig. 3 is a simplified network representation, it is obvious that the OSPF process 22 running in the central router 20 will be the bottleneck in this prior art network. Since the node adjacency is relatively high, the OSPF process will put a lot of pressure on the processing capacity of the central router. If the number of adjacent routers and/or the size of the LSA storm increases, the load on the central OSPF process 22 increases, eventually leading to a processor overload situation with extended CPU-busy periods. From the previous discussion in the background section, it should be clear that distributing the OSPF-process onto several processors or dividing the autonomous system into areas is not an efficient way of solving this problem. Instead, the present invention focuses on reducing the number of adjacencies in order to unburden the OSPF-process.

The general principle of the invention is illustrated in Fig. 4, which is a schematic block diagram of an exemplary OSPF network corresponding to the network of Fig. 3. The central network node 100 is now divided into two logical routers 120-1, 120-2 interconnected by a node-internal interface 130. Each logical router 120 is assigned a dedicated subset of the external link interfaces to the adjacent routers 20, and executes a respective OSPF process 122-1, 122-2 relating to the corresponding subset of the external interfaces and the node-internal interface. In this way, the number of adjacencies (illustrated by dashed lines) of each logical router 120 is substantially reduced. In the particular example of Fig. 4, each logical router only has five adjacencies, four external adjacencies and one node-internal adjacency, as compared to the 8 adjacencies of the central network node illustrated in Fig. 3. Naturally, the number of logical routers and the number of adjacencies may vary within the scope of the invention. Moreover, the adjacencies do not necessarily have to be distributed equally among the logical routers 120. If one OSPF-process 122 is associated with a greater processing capacity than the other, it may for instance be desirable to designate more adjacent routers 20 to the logical router 120 operating with that OSPF-process. For situations, as in Fig. 4, where there are two logical routers of equal adjacencies, the invention however reduces the adjacency to half the prior art adjacency plus one.

The load on the OSPF-process 122 running in each logical router 120 is thus considerably reduced by the invention, since the number of adjacencies is reduced. This results in a stable and reliable network with nodes 100 capable of satisfactory handling an increase in the total number of adjacencies and the corresponding information exchange. Although it is possible to realize the OSPF processes 122 of the logical routers 120 as separate routines or processes in one and the same processor, it is highly desirable to run the routing protocol processes on separate processors 123-1, 123-2, one for each logical router. This provides a directly scalable network node implementation, which effectively prevents processor overload situations due to heavy update traffic. Accordingly, the invention offers substantially improved scalability.

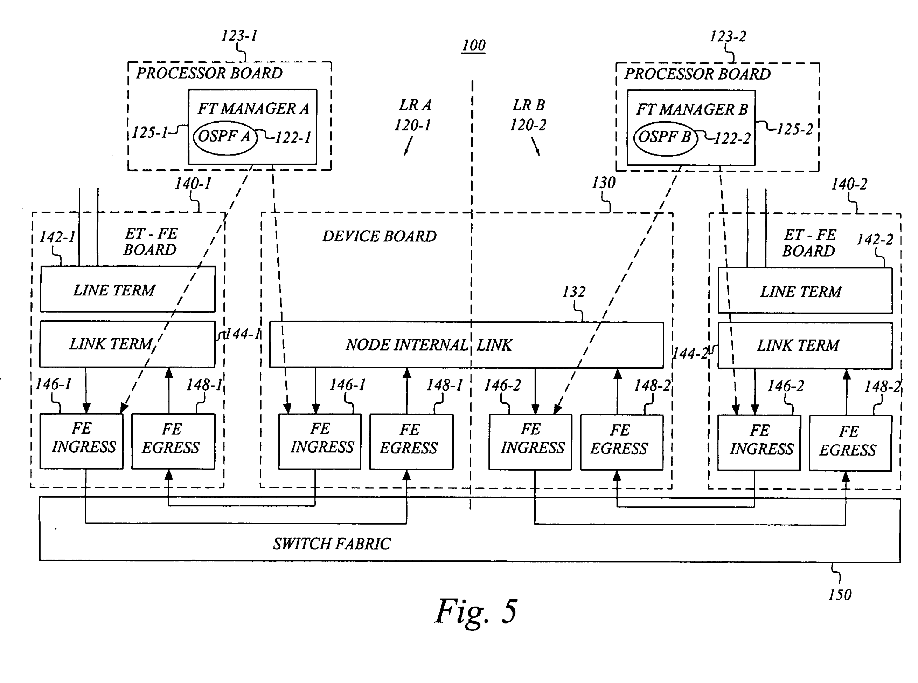

Routers with distributed forwarding (Fig. 2), having a set of cooperating forwarding engines to which the forwarding tables are distributed, can handle a large number of link interfaces to adjacent routers and are therefore often used in network nodes. However, the problem of high load on the OSPF-process is especially pronounced when there are many link interfaces. The following description, with reference to Figs. 5-8, concerns routers with distributed forwarding. Nevertheless, it should be emphasized that the present invention is not limited to distributed forwarding, but covers other types of routers as well.

It is possible to create forwarding engine instances by configuring a subset of the interfaces to be associated with one instance, another subset to be associated with another instance etc. A forwarding engine instance performs IP-forwarding from its own separate forwarding table, independently of other forwarding engines or forwarding engine instances.

Fig. 5 is a schematic block diagram of an OSPF network node in accordance with a first embodiment of the invention. In this embodiment, the node-internal interface 130 connecting the two logical routers (LR A and LR B) 120-1, 120-2 within the node 100 comprises a physical node-internal link 132. In this example, each router has an external terminal forwarding engine (ET-FE) 140-1, 140-2 that includes a line terminal 142-1, 142-2 and a link terminal 144-1, 144-2. It should be noted that the line terminal 142 and the link terminal 144 do not necessarily have to be considered as being part of the logical router 120. The link terminal 144 sends packets over an ingress unit 146-1, 146,2 and receives packets from an egress unit 148-1, 148-2 of the forwarding engine. The main function of the ingress unit 146 is to find out the next hop address of an incoming packet. Each logical router 120 is associated with its own forwarding table (FT) manager 125-1, 125-2, which distributes the forwarding tables generated by the respective OSPF-process 122 to the ingress unit 146 of the respective FE. In the illustrated embodiment, the forwarding table managers 125 send information merely to the ingress units 146 but there may be embodiments where the egress units 148 use the forwarding table as well. Preferably, each OSPF process 122 and associated FT manager 125 are executed on a separate processor maintained on a separate processor board 123.

As disclosed in Fig. 5, the node internal link 132 has to be accompanied by an additional pair of ingress and egress units 146, 148 for each logical router connected thereto. These additional units 146, 148 and the node internal link 132 are in the practically feasible embodiment of Fig. 5 arranged on a device board 130, i.e. a separate board as compared to the ET-FE boards 140. When a packet, following a forwarding decision, is sent from the ET-FE 140-1 of one logical router 120-1 to the ET-FE 140-2 of another logical router 120-2 via the node internal link 132, it is first sent from the ingress unit 146-1 of the first ET-FE 140-1 to a switch fabric 150. Then, the packet is forwarded to the egress unit 148-1 associated with the first logical router 120-1 on the device board 130. From there, the packet is passed over the node internal link 132 to the ingress unit 146-2 associated with the second logical router on the device board 130. Via the switch fabric 150, the packet finally enters the egress unit 148-2 of the second ET-FE 140-2. Hence, traffic from one logical router (see also Fig. 4) has to pass the backplane twice in order to reach another logical router via the node internal link 132 and will burden the internal link and cause a time delay. Furthermore, the implementation of Fig. 5 gives a relatively complicated node structure and therefore requires considerable physical resources.

Although the embodiment illustrated in Fig. 5 offers an advantageous solution compared to prior art network nodes, it is clear from the above that it has a few disadvantages. Therefore, the invention also presents a network node with a node-internal interface that effectively overcomes these limitations.

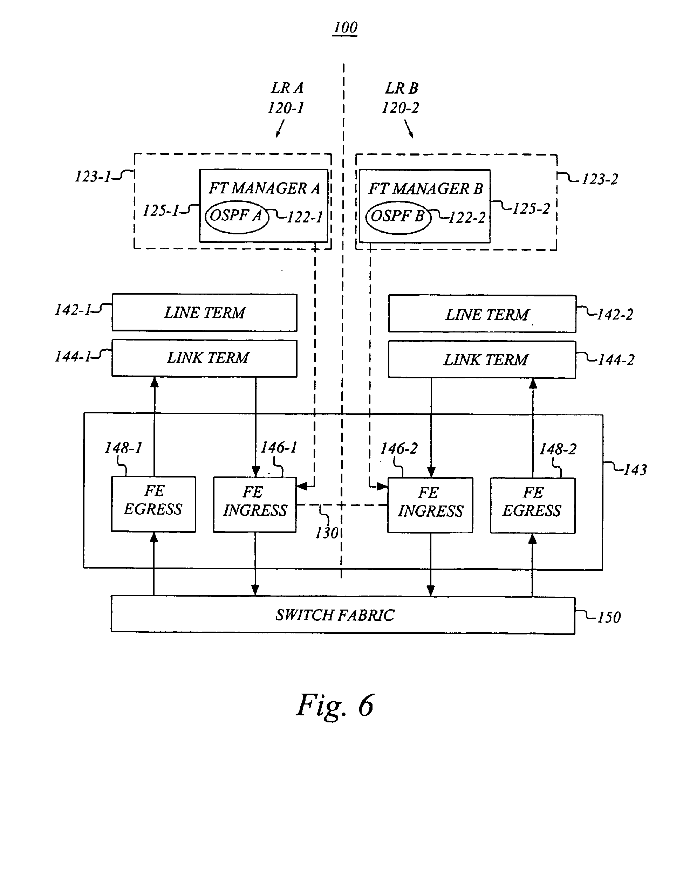

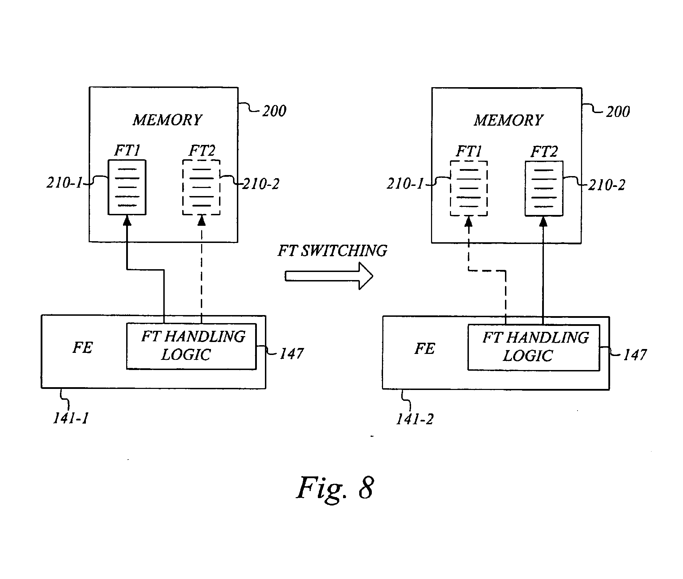

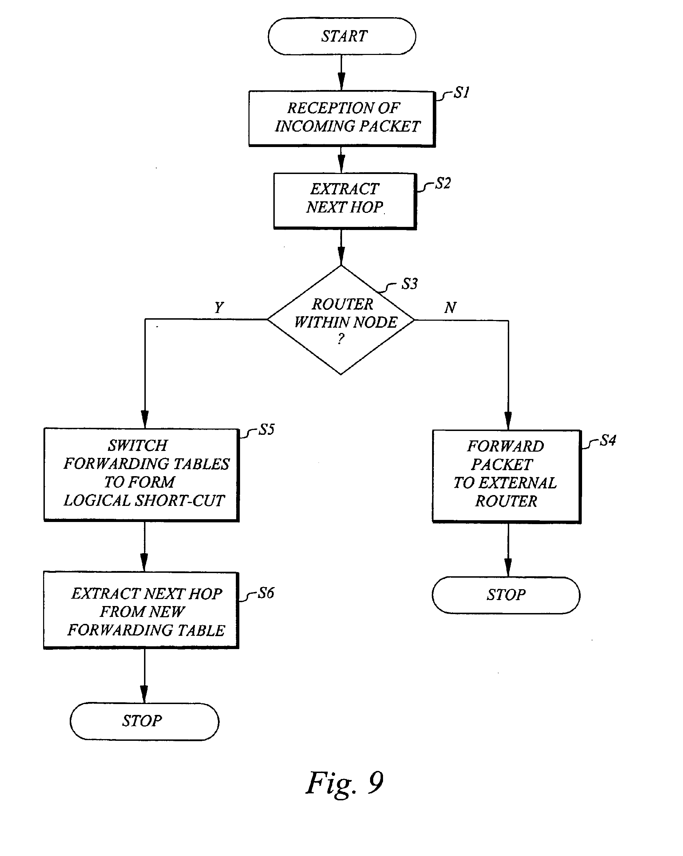

Fig. 6 is a schematic block diagram of an OSPF network node in accordance with a preferred embodiment of the invention. In the example of Fig. 6, the node-internal interface 130 is realized in the form of a logical or virtual interface. Two logical routers (LR A and LR B) 120-1, 120-2, the elements of which correspond to Fig. 5, are interconnected by the node-internal logical interface 130, provided between the ingress units 146 of the respective logical routers 120. The logical interface 130 forms a virtual short-cut link between the two routers, which evidently is very advantageous since it does not require any changes in the physical node structure. The main advantage of the node-internal logical interface 130 is that it offers a highly efficient logical "transport" mechanism. Traffic from one logical router to another logical router does not have to pass the backplane at all, and the "logical bandwidth" is unlimited, as will be described in detail below with reference to Figs. 8 and 9.

Preferably, the ingress and egress units 146, 148 of two logical routers 120 that are interconnected by the logical interface 130 are arranged on a common FE processing unit 143, sharing the same memory. In this example, they thus belong to the same board and preferably also to the same circuit.

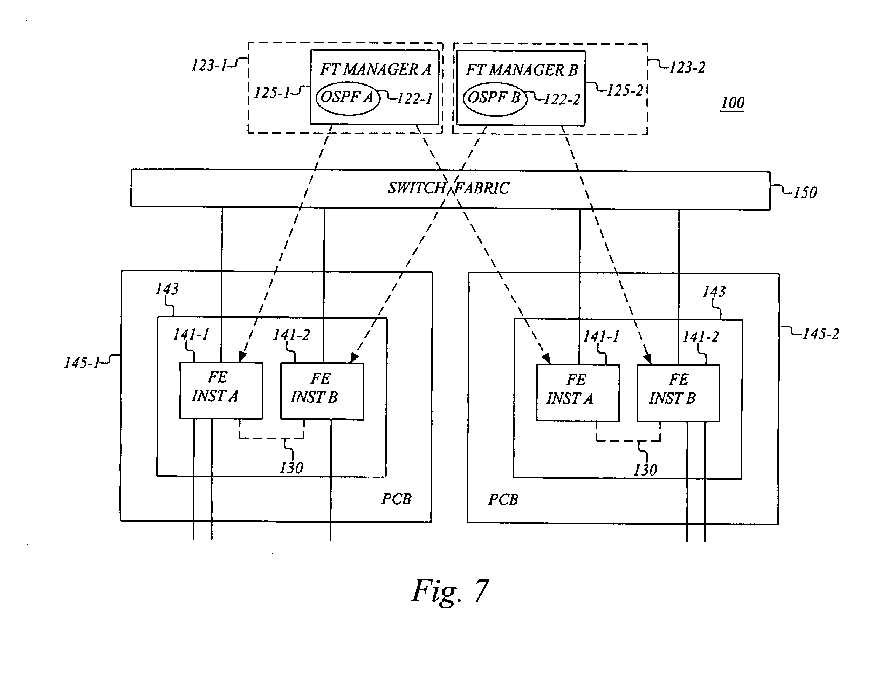

Fig. 7 is a schematic block diagram of an exemplary OSPF network node with a node-internal logical interface according to the invention. Compared to the block diagram of Fig. 6, the block diagram of Fig. 7 represents a different implementational view of the logical interface of the invention. For simplicity, the exemplary network node 100 of Fig. 7 is illustrated as having only two logical routers (A and B), but there may of course be additional logical routers in the node 100. Two printed circuit boards (PCB) 145-1, 145-2, each comprising an FE processing unit 143, are shown. The FE processing unit 143 in turn comprises an instance of the forwarding engine belonging to logical router A (FE INST A) 141-1 as well as an instance of the forwarding engine of logical router B (FE INST B) 141-2. In the example of Fig. 7, there are thus two instances FE INST A 141-1, using the same resources in the sense that they both receive a forwarding table A, and two instances FE INST B 141-2, both receiving a forwarding table B. Handling and distribution of the forwarding tables generated by the respective OSPF processes 122-1, 122-2 are performed by the RT managers 125-1, 125-2 of the logical routers. The FT managers 125, together with the corresponding OSPF processes 122, are preferably executed on separate processors 123.

The FE instances in the particular example of Fig. 7 are illustrated with different numbers of dedicated external interfaces, and there may even be FE instances without external interfaces. The external interfaces may for instance be IP-ports, leading to different subnets. There is also a logical internal interface 130 between the FE INST A 141-1 and the FE INST B 141-2 of each FE processing unit 143. However, as we are dealing with a distributed router architecture and the interfaces are logical, the OSPF-processes 122 only see one node-internal logical link interface between the two logical routers. The node-internal logical interface is preferably realized by switching between the forwarding tables of logical routers A and B, as will be described below with reference to Figs. 8 and 9.

Fig. 8 is a schematic block diagram of a preferred implementation of the node-internal logical interface in accordance with the invention. The logical interface is achieved by switching between forwarding tables of a first and a second logical router. The forwarding engine (FE) 141-1 of a first logical router is shown. It comprises forwarding table (FT) handling logic 147, which contains references to a memory 200. The memory 200 comprises forwarding tables 210-1, 210-2 associated with different logical routers. Initially, the FT handling logic 147 points at a first forwarding table (FT1) 210-1 associated with the first logical router and thus represents an FE instance of the first logical router. By switching between the forwarding tables such that the FT handling logic 147 instead points at the forwarding table (FT2) 210-2 associated with a second logical router, the FT handling logic represents an FE instance of the second logical router. By this straightforward implementation, a highly efficient logical interface, also referred to as a virtual short-cut link, is formed between the logical routers. Moreover, the logical interface 130 can easily be altered to adapt to changes in the network by changing the pointer of the FT handling logic 147. This is very useful, since different situations may require different link interface configurations.

Fig. 9 is a flow diagram of a routing method in accordance with the invention. The routing process begins in step S1 with the reception of an incoming packet to a logical router. Based on destination address information in the packet, a next hop is then extracted in step S2 by consulting the forwarding table of the logical router. In step S3, the extracted next hop information is evaluated. If the next hop indicates an external router, the packet is forwarded to the router in a conventional way in step S4. If, on the other hand, the next hop indicates another logical router within the same network node, the procedure continues in step S5 by switching to the forwarding table of the indicated logical router. In this way, a simple logical short-cut interface of unlimited bandwidth is formed. The logical interface enables the extraction of a next hop from the new forwarding table in step S6, thus completing the routing of the packet within the network node (assuming that the next hop is an external router).

The routing procedure according to the invention may alternatively be represented in pseudo-code:

```
 START ROUTING PROCEDURE FOR INCOMING PACKET
      RESOLVE PHYSICAL DESTINATION ADDRESS FROM THE PACKET;
      EXTRACT NEXT HOP FROM THE FORWARDING TABLE BASED ON THE DESTINATION
 ADDRESS;
      IF NEXT HOP INDICATES EXTERNAL ROUTER
            SEND PACKET TO NEXT HOP
      ELSE IF NEXT HOP INDICATES ANOTHER LOGICAL ROUTER WITHIN THE SAME NODE
            SWITCH TO THE FORWARDING TABLE OF THE OTHER LOGICAL ROUTER;
            EXTRACT NEXT HOP FROM THE NEW FORWARDING TABLE;
      ELSE DECLARE ROUTING ERROR;
 END.
```

As mentioned, conventional distributed forwarding offers high scalability but introduces more severe problems as the number of link interfaces and the update traffic increases. The fact that the invention may be properly implemented for routers based on distributed forwarding therefore constitutes a major improvement as compared to prior art. By forming logical routers and distributing the forwarding tables onto FE processing units in the way described above, the invention reduces the disadvantages associated with distributed forwarding and offers a highly scalable, yet stable and reliable network node.

Another aspect of the invention relates to the realization of a security policy in order to control the traffic over the node-internal interface. Preferably, such a security policy is implemented in a so-called egress filter. If the next hop resulting from a look up in the routing table points at a node-internal interface, the security-policy of the egress filter is activated. The filter determines whether the packet is to be forwarded to the indicated logical router, deleted or tunneled. In this way, strict control of the packet flow over the node-internal interfaces of the network is achieved.

The embodiments described above are merely given as examples, and it should be understood that the present invention is not limited thereto. For example, it is possible to use the invention in a network that is partitioned into areas, implementing multiple logical routers in any of the participating network nodes including the area border nodes.

## Claims

1. A network node having multiple external interfaces to adjacent routers (20), said network node (100) comprising:
- multiple logical routers (120); and
- a node-internal interface (130) between at least two of said logical routers,
- each one of said at least two logical routers being assigned a dedicated subset of the external interfaces of said network node and having means for executing a separate routing protocol process (122) relating to:
a) the corresponding subset of said external interfaces; and
b) the node-internal interface (130),
thereby reducing the number of adjacencies related to each one of said at least two logical routers compared to the overall node adjacency.

2. The network node according to claim 1, wherein said node-internal interface (130) is a logical interface.

3. The network node according to claim 2, wherein said node-internal logical interface (130) is implemented by means (147) for switching between a routing table of a first logical router (120) and a routing table of a second logical router (120).

4. The network node according to claim 1, wherein each one of said logical routers (120) executes its routing protocol process (122) on a separate processor (123).

5. The network node according to claim 1, wherein said routing protocol processes (122) are based on a link-state routing protocol.

6. The network node according to claim 5, wherein said link-state protocol is the Open Shortest Path First (OSPF) protocol.

7. The network node according to claim 1, wherein each logical router (120) comprises multiple forwarding engines (141) and the corresponding routing table is distributed to each forwarding engine (FE) within the logical router, and that said node-internal interface (130) is implemented by means (147) for switching between a FE routing table (210) of a first logical router and a FE routing table (210) of a second logical router.

8. The network node according to claim 7, wherein each forwarding engine (141) comprises means for extracting a next hop from the FE routing table (210), and for switching, if the next hop in the FE routing table indicates another logical router (120), to the FE routing table (210) of the other logical router.

9. The network node according to claim 1, wherein said network node (100) further comprises means for implementing a security policy controlling the traffic over said node-internal interface (130).

10. A network comprising a network node according to any of the claims 1-9.

11. A method of configuring a network node having multiple external interfaces to adjacent routers (20), said method comprising the steps of:
- establishing multiple logical routers (120); and
- providing a node-internal interface (130) between at least two of said logical routers;
- dividing the external interfaces of said network node among the logical routers so that each one of said logical routers (120) is assigned a dedicated subset of said external interfaces;
- each one of said at least two logical routers being configured for executing a separate routing protocol process (122) relating to:
a) the corresponding subset of said external interfaces; and
b) the node-internal interface (130),
thereby enabling a reduction of the number of adjacencies related to each one of said at least two logical routers compared to the overall node adjacency.

12. The method according to claim 11, wherein said node-internal interface (130) is provided in the form of a logical interface.

13. The method according to claim 12, wherein said node-internal logical interface (130) is implemented by switching between a routing table of a first logical router (120) and a routing table of a second logical router (120).

14. The method according to claim 11, wherein each routing protocol process (122) is executed on a separate processor (123).

15. The method according to claim 11, wherein said routing protocol processes (122) are based on a link-state routing protocol.

16. The method according to claim 11, wherein said method further comprises the step of implementing a security policy controlling the traffic over said node-internal interface (130).

17. A routing method in a communication network having a network node (100) configured according to any of the claims 11-16, wherein said method comprises the steps of:
- extracting, from a routing table of a first logical router (120) in said network node (100), a next hop based on destination address information in an incoming packet; and
- if the next hop indicates a second logical router (120) within said network node (100), switching to the routing table of the second logical router and extracting a new next hop from that routing table.

18. The routing method according to claim 17, further comprising the step of controlling, before said step of switching, whether a packet is allowed to be routed to the second logical router (120), and switching to the routing table of the second logical router only if the packet is approved.

## Patentansprüche

1. Netzknoten mit mehreren externen Schnittstellen zu benachbarten Routern (20), wobei der Netzknoten (100) umfasst:
- mehrere logische Router (120); und
- eine knoteninterne Schnittstelle (130) zwischen mindestens zwei der logischen Router,
- wobei jeder von den mindestens zwei logischen Routern einem dedizierten Sub-Satz externer Schnittstellen des Netzknotens zugeordnet ist und eine Einrichtung zum Ausführen eines getrennten Routingprotokollprozesses (122) hat in Bezug auf:
a) den entsprechenden Sub-Satz der externen Schnittstellen; und
b) die knoteninterne Schnittstelle (130),
hierdurch die Anzahl jeder der mindestens zwei logischen Router betreffenden Nachbarschaften verglichen mit der Gesamtknotennachbarschaft reduzierend.

2. Netzknoten nach Anspruch 1, wobei die knoteninterne Schnittstelle (130) eine logische Schnittstelle ist.

3. Netzknoten nach Anspruch 2, wobei die knoteninterne logische Schnittstelle (130) durch eine Vorrichtung (147) zum Umschalten zwischen einer Routingtabelle eines ersten logischen Routers (120) und einer Routingtabelle eines zweiten logischen Routers (120) implementiert wird.

4. Netzknoten nach Anspruch 1, wobei jeder der logischen Router (120) seinen Routingprotokollprozess (122) auf einem getrennten Prozessor (123) ausführt.

5. Netzknoten nach Anspruch 1, wobei die Routingprotokollprozesse (122) auf einem Verbindungszustands-Routingprotokoll basieren.

6. Netzknoten nach Anspruch 5, wobei das Verbindungszustandsprotokoll das Open-Shortest-Path-First-Protokoll bzw. OSPF-Protokoll ist.

7. Netzknoten nach Anspruch 1, wobei jeder logische Router (120) mehrere Weiterleitungsmaschinen (141) umfasst und die entsprechende Routingtabelle an jede nachstehend FE genannte Weiterleitungsmaschine innerhalb des logischen Routers verteilt ist, und dass die knoteninterne Schnittstelle (130) durch eine Einrichtung (147) zum Umschalten zwischen einer FE-Routingtabelle (210) eines ersten logischen Routers und einer FE-Routingtabelle (210) eines zweiten logischen Routers implementiert wird.

8. Netzknoten nach Anspruch 7, wobei jede Weiterleitungsmaschine (141) eine Einrichtung umfasst zum Extrahieren einer nächsten Teilstrecke von der FE-Routingtabelle (110), und um, wenn die nächste Teilstrecke in der FE-Routingtabelle einen anderen logischen Router (120) angibt, zu der FE-Routingtabelle (210) des anderen logischen Routers umzuschalten.

9. Netzknoten nach Anspruch 1, wobei der Netzknoten (100) ferner eine Einrichtung umfasst zum Implementieren einer den Verkehr über die knoteninterne Schnittstelle (130) steuernden Sicherheits-Policy.

10. Netz, einen Netzknoten nach einem der Ansprüche 1-9 umfassend.

11. Verfahren zum Konfigurieren eines Netzknotens mit mehreren externen Schnittstellen zu benachbarten Routern (20), wobei das Verfahren die Schritte umfasst:
- Einrichten mehrerer logischer Router (120); und
- Bereitstellen einer knoteninternen Schnittstelle (130) zwischen mindestens zwei der logischen Router;
- Aufteilen der externen Schnittstellen des Netzknotens unter den logischen Routern so, dass jedem der logischen Router (120) ein dedizierter Sub-Satz von den externen Schnittstellen zugeordnet ist;
- wobei jeder der mindestens zwei logischen Router konfiguriert ist zum Ausführen eines getrennten Routingprotokollprozesses (122), der sich bezieht auf:
a) den entsprechenden Sub-Satz der externen Schnittstellen; und
b) die knoteninterne Schnittstelle (130),
hierdurch verglichen mit der Gesamtknotennachbarschaft ein Reduzieren der Anzahl von Nachbarschaften, die sich auf jeden der mindestens zwei logischen Router beziehen, ermöglichend.

12. Verfahren nach Anspruch 11, wobei die knoteninterne Schnittstelle (130) in Form einer logischen Schnittstelle bereitgestellt wird.

13. Verfahren nach Anspruch 12, wobei die knoteninterne logische Schnittstelle (130) durch Umschalten zwischen einer Routingtabelle eines ersten logischen Routers (120) und einer Routingtabelle eines zweiten logischen Routers (120) implementiert wird.

14. Verfahren nach Anspruch 11, wobei jeder Routingprotokollprozess (122) auf einem getrennten Prozessor (123) ausgeführt wird.

15. Verfahren nach Anspruch 11, wobei die Routingprotokollprozesse (122) auf einem Verbindungszustandsroutingprotokoll basieren.

16. Verfahren nach Anspruch 11, wobei das Verfahren ferner den Schritt des Implementierens einer den Verkehr über die knoteninterne Schnittstelle (130) steuernden Sicherheits-Policy umfasst.

17. Routingverfahren in einem Kommunikationsnetz mit einem Netzknoten (100), der konfiguriert ist gemäß einem der Ansprüche 11 bis 16, wobei das Verfahren die Schritte umfasst:
- Extrahieren eines nächsten Teilstücks von einer Routingtabelle eines ersten logischen Routers (120) in dem Netzknoten (100) basierend auf Zieladresseninformation in einem kommenden Paket; und
- wenn das nächste Teilstück einen zweiten logischen Router (120) innerhalb des Netzknotens (100) angibt, Umschalten zu der Routingtabelle des zweiten logischen Routers und Extrahieren eines neuen nächsten Teilstücks von dieser Routingtabelle.

18. Routingverfahren nach Anspruch 17, ferner vor dem Schritt des Umschaltens den Schritt des Steuerns umfassend, ob ein Paket als zu dem zweiten logischen Router (120) geroutet zu werden zugelassen ist, und des Umschaltens zu der Routingtabelle des zweiten logischen Routers nur, wenn das Paket bestätigt wird.

## Revendications

1. Noeud de réseau possédant plusieurs interfaces externes vers des routeurs adjacents (20), ledit noeud de réseau (100) comprenant :
- plusieurs routeurs logiques (120) ; et
- une interface interne au noeud (130) entre au moins deux parmi lesdits routeurs logiques,
- chacun desdits au moins deux routeurs logiques se voyant assigner un sous -ensemble dédié des interfaces externes dudit noeud de réseau et possédant un moyen destiné à exécuter un processus de protocole de routage distinct (122) relatif :
a) au sous -ensemble correspondant desdites interfaces externes ; et
b) à l'interface interne au noeud (130),
réduisant ainsi le nombre d'adjacences relatives à chacun desdits au moins deux routeurs logiques par rapport à l'adjacence globale du noeud.

2. Noeud de réseau selon la revendication 1, dans lequel ladite interface interne au noeud (130) est une interface logique.

3. Noeud de réseau selon la revendication 2, dans lequel ladite interface logique interne au noeud (130) est mise en oeuvre par un moyen (147) destiné à effectuer une commutation entre une table de routage d'un premier routeur logique (120) et une table de routage d'un second routeur logique (120).

4. Noeud de réseau selon la revendication 1, dans lequel chacun desdits routeurs logiques (12 0) exécute son processus de protocole de routage (122) sur un processeur distinct (123) .

5. Noeud de réseau selon la revendication 1, dans lequel lesdits processus de protocole de routage (122) sont basés sur un protocole de routage à état de lien.

6. Noeud de réseau selon la revendication 5, dans lequel ledit protocole à état de lien est le protocole OSPF (*Open Shortest Path First -* priorité au chemin ouvert le plus court).

7. Noeud de réseau selon la revendication 1, dans lequel chaque routeur logique (120) comprend plusieurs moteurs de propagation (141) et la table de routage correspondante est distribuée à chacun des moteurs de propagation (FE pour *Forwarding Engine*) dans le routeur logique, et ladite interface interne au noeud (130) est mise en oeuvre par u n moyen (147) destiné à effectuer une commutation entre une table de routage FE (210) d'un premier routeur logique et une table de routage FE (210) d'un second routeur logique.

8. Noeud de réseau selon la revendication 7, dans lequel chaque moteur de propagation (141) comprend un moyen destiné à extraire un nouveau saut de la table de routage FE (210) et à commuter, si le nouveau saut dans la table de routage FE indique un autre routeur logique (120), vers la table de routage FE (210) de l'autre routeur logique.

9. Noeud de réseau selon la revendication 1, dans lequel ledit noeud de réseau (100) comprend de plus un moyen destiné à mettre en oeuvre une politique de sécurité commandant le trafic sur ladite interface interne au noeud (130).

10. Réseau comprenant un noeud de réseau selon l'une quelconque des revendications 1 à 9.

11. Procédé de configuration d'un noeud de réseau possédant plusieurs interfaces externes vers des routeurs adjacents (20), ledit procédé comprenant les étapes consistant à :
- établir plusieurs routeurs logiques (120) ; et
- fournir une interface interne au noeud (130) entre au moins deux desdits routeurs logiques,
- répartir les interfaces externes dudit noeud de réseau parmi les routeurs logiques de telle manière que chacun desdits routeurs logiques (120) se voit assigner un sous-ensemble dédié desdites interfaces externes ;
- chacun desdits au moins deux routeurs logiques étant configuré pour exécuter un processus de protocole de routage distinct (122) relatif :
a) au sous -ensemble corresponda nt desdites interfaces externes ; et
b) à l'interface interne au noeud (130),
permettant ainsi une réduction du nombre d'adjacences relatives à chacun desdits au moins deux routeurs logiques par rapport à l'adjacence globale du noeud.

12. Procédé selon la revendication 11, dans lequel ladite interface interne au noeud (130) est fournie sous la forme d'une interface logique.

13. Procédé selon la revendication 12, dans lequel ladite interface logique interne au noeud (130) est mise en oeuvre par une commutation entre une table de routage d'un premier routeur logique (120) et une table de routage d'un second routeur logique (120).

14. Procédé selon la revendication 11, dans lequel chaque processus de protocole de routage (122) est exécuté sur un processeur distinct (123).

15. Procédé selon la revendication 11, dans lequel lesdits processus de protocole de routage (122) sont basés sur un protocole de routage à état de lien.

16. Procédé selon la revendication 11, dans lequel ledit procédé comprend de plus l'étape consistant à mettre en oeuvre une politique de sécurité commandant le trafic sur ladite interface interne au noeud (130).

17. Procédé de routage dans un réseau de communication possédant un noeud de réseau (100) configuré selon l'une quelconque des revendicati ons 11 à 16, dans lequel ledit procédé comprend les étapes consistant à :
- extraire, d'une table de routage d'un premier routeur logique (120) dans ledit noeud de réseau (100), un saut suivant sur la base d'une information d'adresse de destination dans un paquet entrant ; et
- si le prochain saut indique un second routeur logique (120) dans ledit noeud de réseau (100), commuter vers la table de routage du second routeur logique et extraire un nouveau saut suivant à partir de cette table de routage.

18. Procédé de routage selon la revendication 17, comprenant de plus l'étape consistant à contrôler, avant ladite étape de commutation, si un paquet est autorisé ou non à être dirigé vers le second routeur logique (120), et à n'effectuer une commutation vers la table de routage du second routeur logique que si le paquet est approuvé.
